# EUROPEAN PATENT SPECIFICATION

(11) **EP 0 237 460 B1**
(45) Date of publication and mention of the grant of the patent: **25.10.1995**
(21) Application number: 87600005.0
(22) Date of filing: 11.05.1987
(51) Int. Cl.: B31B 1/00, B05C 1/02

(54) **Device and method of accurate feeding, coating, plasticizing and cutting of sheets**
Vorrichtung und Verfahren zum genauen Zuführen, Auslegen, Plastifizieren und Schneiden von Bögen
Appareil et méthode pour alimenter, revêtir, plastifier et couper des feuilles d'une façon précise

(30) Priority: 17.09.1986 GR 862375
(43) Date of publication of application: 16.09.1987
(73) Proprietor: Karagiannis, Constantinos, GR-176 74 Athens (GR)
(72) Inventor: Karagiannis, Constantinos, GR-176 74 Athens (GR)

(56) References cited:
- DE-A- 2 314 531
- FR-A- 1 236 942
- US-A- 1 736 340
- US-A- 1 856 659
- US-A- 1 908 291
- US-A- 2 294 520

## Description

### Background to the invention.

The present invention is a novelty and relates to a single device and a method that can do coating and lamination on perforated or non perforated sheets (pieces), said sheets are made of paper, card, metal or plastic, with two different ways of sheet coating, without using the classic problematic impression cylinder (grippers).

It comprises a new automatic and simplified sheet feeding head, and supplies the coating materials automaticaly, with continuous recycling of said materials.

The main idea behind this invention, was to create a device, said device to solve all the existing problems, (for which, I will analytically refer, to each one and for every section), in graphic arts branch, and in boxing generally, in sheet coating and sheet varnishing, as to improve quality, multiply the production, and to minimise production and manufacture cost.

Indeed the invented device and method, are absolutely responding to the above, bearing in mind, that in the position of the invented device, a factory should use four different devices instead, devices that are manufactured up today, said devices having smoler production, compared to the invented device.

This means multiple buing and working cost, less free space for the factory and with questionable results, in sheet lamination and especialy for perforated sheets, said sheets going to become laminated paper boxes with window.

The invented device is absolutely silent and easy on use, few demonstration hours are enough for a non experienced person to be able to handle said device, in opposition with devices that are manufactured up today, which require few months of training.

The quality of treated sheets is excellent, said quality being of mass production and of low cost, especialy on laminated sheets, because the laminated sheets with the adhesive are pressed, right after being wet, with the transparent plastic film, and said sheets are tightly rolled in roll, immediately, with the result of having less adhesive consumption, the faster possible speed in the device, and better adhesion.

The adhesive used in the invented device, for sheet lamination, is water solved, absolutely non smelly, of low cost, non flammable and non polluting.

The up today manufactured devices use adhesives with solvents, which are polluting, expensive, flammable, and before the adhesion, their solvents should have vapoured.

### SUMMARY OF THE INVENTED DEVICE

The invented device is mainly characterized of a being a single, independent and integrated device, for sheet treatment, of multiple working abilities, such as: it comprises a special sheet feeding head, means for feeding sheets made from paper, card, board, metal or plastic, said sheets size can vary inside the stack of sheets, and for sheets with large openings (windows).

It is possible to have three different, coating and sheet laminating systems simultaneously, doing four different works:
a. One side, sheet varnishing or colouring using an added furnace for sheet drying.
b. Both side, sheet coating for lamination, colouring, varnishing.
c. Perforated or non perforated sheet lamination with the adhesive coated on the sheets.
d. Sheet lamination with the adhesive coated on the film in roll.

Also insted of said furnace, said device can have a single accurate cutter, said cutter uses two cutting methods (sheet separation).
a. Cutting system with knives for, perforated or non perforated, laminated sheets with the adhesive coated on sheets.
b. Cutting system using the one side pulling method, for laminated sheets, with the adhesive coated on the film in roll.

Also automatic supply, of the coating materials, is possible with continuous and direct recycling, simultaneously, in the device, in material's pan, and in the big barrel.

### BRIEF REPORT ON SECTIONS AND ILLUSTRATIONS OF THE INVENTED DEVICE

- 1st Section.: A. Automatic sheet feeding.
B. Special device, feeding sheets with large openings (windows).
- 2nd Section.: A. Sheet varnishing, colouring or lamination, using the sheet coating method.
B. Variations and alterations of the invented device, refering sheet coating and sheet lamination.
C. Automatic supply with continuous recucling of the coating materials.
- 3nd Section.: Accurate cutting device for laminated sheets, in accordance to the invented device.
- Drowings.: All the drowings of the invented device, illustrate schematic presentations of side view, aiming in better understanding of the invention. Which are:
a. Fig 1, where, according to the invention, sheet nfeeding for treatment takes place.
b. Fig 2, where, takes place, 1) coating with colours, varnish or adhesive, on upper sheet'side. 2) coating with colours, varnish or adhesive, both sheet's sides, and 3) lamination with the adhesive coated on sheet, only for the occasions, where perforated sheets are going to become laminated paper boxes with window.
c. Fig 3, where, takes place, 1) sheet coating on the under sheet's side, as sheet advances and 2) sheet lamination with the adhesive coated on sheet.
d. Fig 4, where takes place, 1) sheet coating on sheets's upper side and 2) sheet lamination with the adhesive coated on sheet.
e. Fig 6, where takes place, 1) sheet coating on sheet's upper side, and 2) sheet coating on sheet's both sides, and 3) sheet lamination with the adhesive coated on sheet.

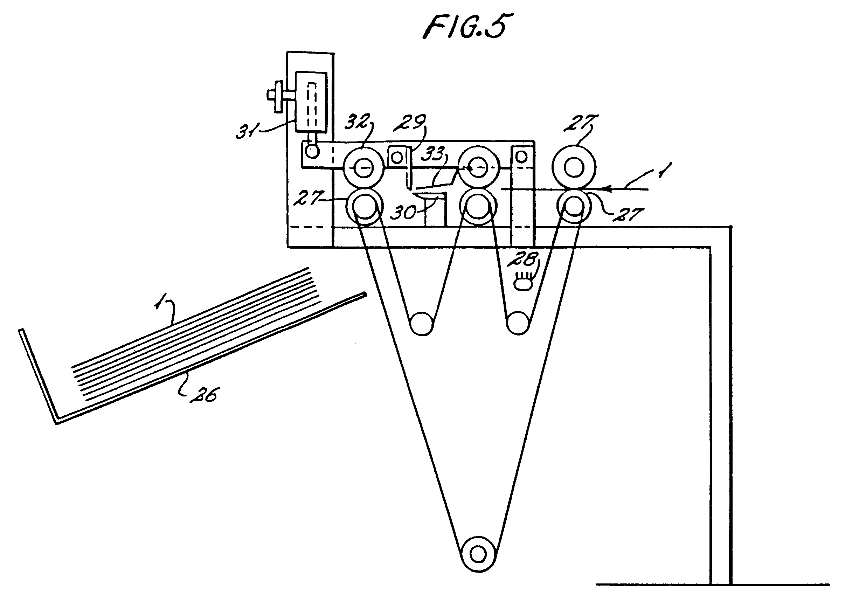

f. Fig 5, where, takes place, the cutting (separation) of laminated sheets according to the invention.
g. Figs 8, 8a and 8b, where, the sheet coating section is illustrated.

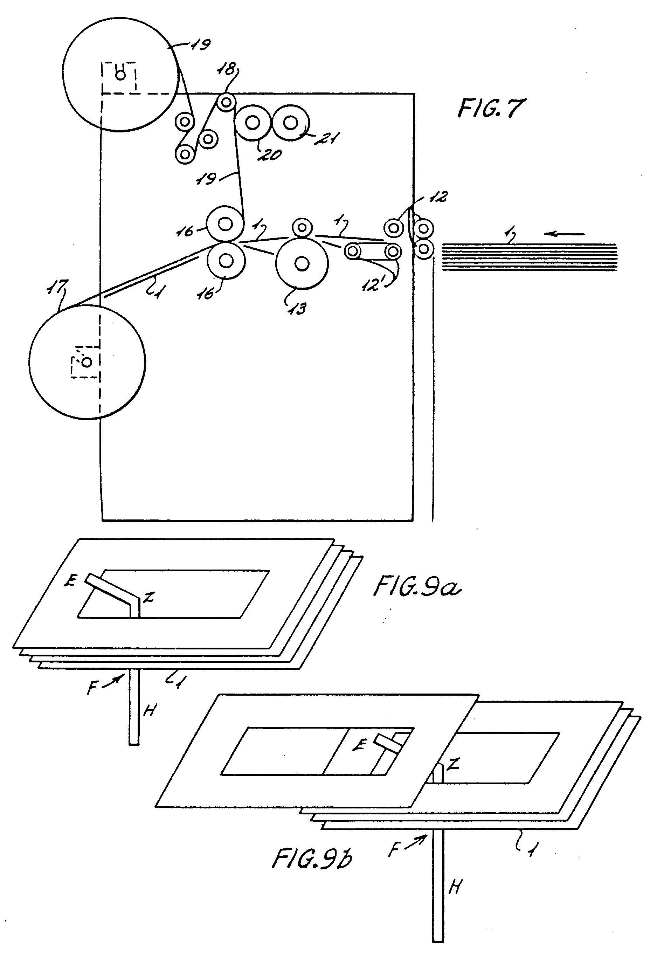

h. Figs 9a and 9b, where, the special device, refering to sheet feeding of sheets with large openings (windows), is illustrated.

### INVENTION'S DETAILED DESCRIPTION

### 1st Section. A. Automatic sheet feeding. Report on previous technology.

The study of the document US-A-1,736,340, which refers to a most complicated sheet feeding system of a doutful practical application, does not have any similarity with the present invention, exept for some common appelations, which are used in every feeding.

Up today the manufactured sheet feeding systems, are characterized from their complex constraction, their manufacturing high cost, the problems they generate in sheet feeding, especially, when sheets made from paper or card (more common), said sheets not being flat and being wrinkled (more common), and having in the stack of sheets, small or large shaped sheets, then, said sheets are fed bent or double, resulting in the continuous blockage of the device.

Also said systems are completely inadequate for feeding perforated sheets, to be laminated, which said sheets are going to become laminated paper boxes for food, with window, because, when, before lamination, the card gets perforated, usually said card wrinkles, so when said sheet is gripped by the cuppings, said cuppings advance said sheet to the guide rollers and transfer belts, exposed sheet's hole trailing edje engages with next sheet's, coming from the stack of sheets, hole leading edge, which has already wrinkled at the points of the hole, where the card has gone.

The problem worsens, when the exhisting sheets have large holes or edged shapes.

### Sheet feeding of the invented device, description.

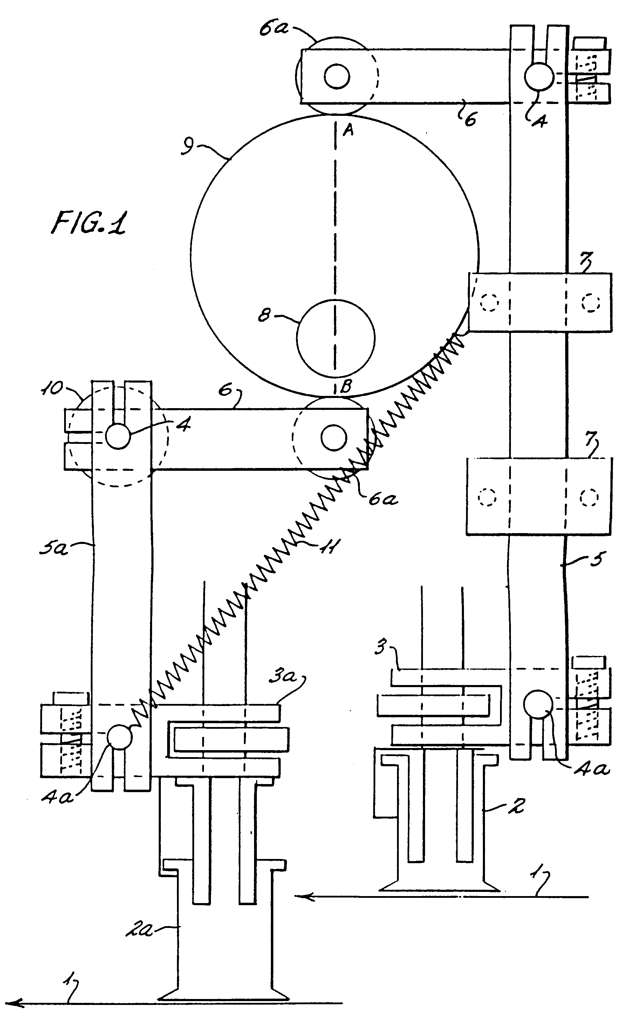

The attached fig 1, clearly illustrates a cam 9 with points A, pointing upwards, and point B pointing downwards, tightened to the main shaft 8, which is attached on bearings, positioned at the head's sides.

When the main shaft 8, is rotated with cam 9 and causes upward and downward movement of arms 5 with arm 6 including the bearing 6a, wich are connected together to a small shaft Arms 5 work as pistons inside sliders 7, which are screwed at head's sides. Arms 5 at their bottom carry a small shaft 4, on which are attached, and can be adjusted for various angles and positions, the supporting blocks 3, where the first row of cuppings 2 is supported, (lifting), which suck and lift the sheets 1, giving said sheets to second row of cuppings 2 (advancing), (where the rows of cuppings (lifting and advancing) can move and take whichever is the position and angle of the perforated sheets).

On bearings 10, positioned at head's side, a small shaft 4 is supported, where an arm 6 with bearings 6a, is tightened. On the same small shaft 4 the arms 5a are tightened, supporting at their bottom a small shaft 4, where, second row of cuppings 2, supporting blocks 3 are supported (advancing). All together assembled, take motion from cam 9, so the second row of cuppings advance the sheet 1 to the next stages of the device.
Figs 2, 3, 4, 6 and 7.

### B. Special device in, feeding sheets with large openings (windows)

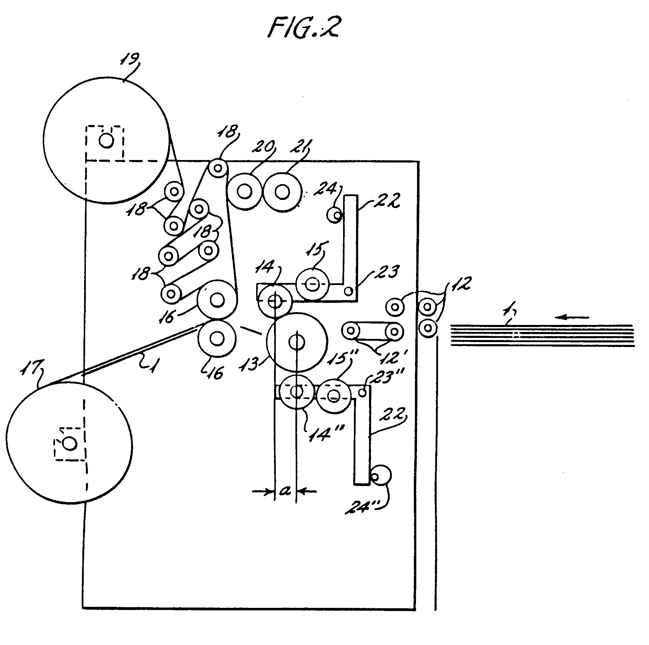

When the sheets having large openings (windows), are large, and said sheets are made from card, and going to be laminated, said sheets cannot keep their surface flat. Especially when said sheets are kept in wet environments, the wrinkles are of great extent, having as a result the difficulty, whichever the adjustments and alterations of the special feeding device (sheet feeding head) of fig 1, in feeding. This difficulty appears, because, when the sheets 1 advance with the aid of the second row of cuppings 2, for said sheets to reach transfer system 12, of figs 2, 3, 4, 6 and 7, exposed sheet's hole trailing edge engages with next sheet's hole leading edge, said sheet coming from the stack of sheets, as said sheets advance engaged. To overcome this problem, the following method and special device, are applied.

The platform carrying the sheet feeding stack, said sheets have large openings (windows), said platorm is vertically moveable, including needed apparatus, and moved when desired, has holes or splits.

Also underneath said platform there are beams having holes or splits along said platform's length, said beams can be adjusted on a stable base. Appropriate squared or rounded bars are supported on said beams, passing through said platform's holes or splits and through the openings of said sheets. Every squared or rounded bar HEZ, fig 9a, is bent and forms a reflex angle, therefore the bending point Z (angle's top formed by bending) is below sheets leveland inside their opening (hole), and point E is over sheets level and before sheets hole leading edge.

Thus, when sheet advances (fig 9b), said exposed sheet's hole trailing edge doesn't engage with next sheet's, coming from the stack of sheets, hole leading edge, because said sheet's, trailing edge moves on an angle's leg EZ, said leg origins inside the opening (window) and underneath sheet level, and ends outside the opening and over sheet level.

So, while the sheet feeding platform, continuously changes position, vertically miving, during feeding, the squared or rounded bars are kept at the same position, relative to sheet level. Fig 9a illustrates the stack of sheets in still position with squared bar HZE inside sheet stack opening, while fig 9b illustrates exposed sheet of the stack, advancing with its trailing edge over squared bar HZE. Also a little lower than sheet level at squaqred bar's bending point Z, a cushion of air blowing upwards, could be used insted, achieving said means for sheets with large openings (windows).

Whith the invented, simplified and adjustable sheet feeding head of the device, and special device, for perforated sheets whith large openings, all the problems and disadvantages of previous techniques are overcomed.

This invention is characterized in having few number of parts, and said parts ability to be moved and controled easily, especialy the lifting and advancing cuppings, said cuppings taking any angles and positions, the feeding sheets require,especially sheets with large openings, avoiding said openings, during function, feeding even the most wrinkled sheets whith openings and different in size, without any engagements, and in whatever speed of the device.

### 2nd SECTION: A. Varnishing or sheet laminating, using coating on sheets. Report on previous technology.

From the study of the document US-A-1,856,659, results that exept for the common words (window, adhesive application and roll), there is none other similarity with the present invention; since it refers to a device that forms envellops, to which at the same time, windows are opeed on a continuous web of paper, it glues parts of transparent paper on the openings, while before that it supplies adhesive to particular places. Since today, technology manufactures devices for sheet coating, said devices use cylinders and the classic and problematic reciprocable impression cylinder (grippers), said cylinder grips and rotates the sheet (gripping length 0-1,5 cm approx.) about the rotating cylinders, and after said sheets has been coated, an other set of grippers (gripping members), grips said sheet from said cylinder, advancing said sheet in a heated tunnel, for the glue (adhesive) or varnish to be dried.

This method has many disadvantages and creates many problems in sheet coating, such as: a) Machine's blockage because of wrinkled, smaller or larger sheets, said sheet from the stack of sheets, said sheets stick on said cylinder, because of said adhesive materials.

So, at the time when said sheet, while kept on reciprocable said cylinder is usually covered with an added rubber, is coated apart from coating said sheet, said cylinder will also be coated at the places where it is not covered by said sheet. If the next sheet, coming from the stack of sheets, is larger or if there is a gripping member's misscatch because of said sheet's wrinkles, said sheet will stick on said cylinder, also the next sheet, coming from the stack, will do, till the machine stops, destroying a number of sheets, as a result (and many times said cylinder's rubber), in every blockage, and having a big delay in unsticking said stuck sheets and for said cylinder to be cleaned with a solvent, till said cylinder is ready for further use.

In all the above, worker's hard time is not under consideration, bearing in mind that said cylinder is not easily accessible, making dissengagement difficult.
b) In every sheet shape change, cleaning said cylinder is necessary, as adjusting for next sheet shape.
c) The sheet parts covered by the grippers, usually get cut and thrown away afterwards, because said parts are not coated. This loss is 2 or 3% of total sheet area.
d) Given that the periphery of said cylinder is determined, has the dissadvantage of not accepting larger than its diameter sheets, and with sheets it decreases production in sheet m2, having big working and manufacturing cost.

### Description of the invented device's section for varnishing, colouring or sheet laminating with coating on the sheets.

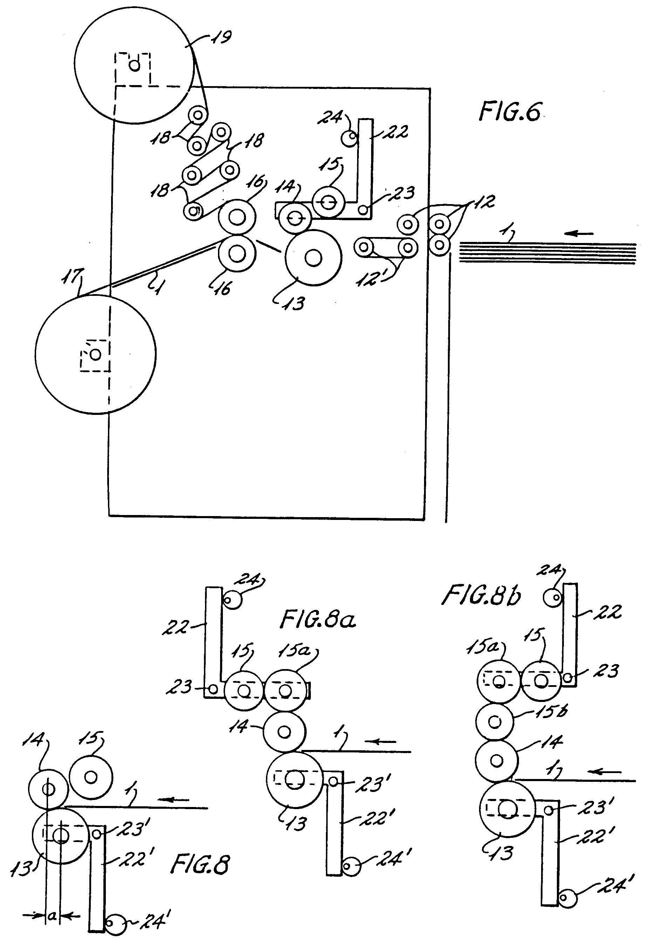

The attached figs 2 and 6 clearly illustrate the way in feeding a sheet 1 through the transmission apparatus (rollers and transfer belts 12), said sheet reaching and being between pressure cylinder 13 and coating cylinder 14, where sheet coating takes place with the following method: Advancing the sheet 1 through the rollers and sheet transfer belts 12, said sheet hits at coating cylinder 14 positioned on a different immaginary vertical axis from pressure cylinder 13, the difference of the two immaginary vertical axes is varied from 0 to 15 cm.

Pressure cylinder 13 can either be over or under cylinders 14 and 15, but without touching each other. Hitting said sheet 1 the said coating cylinder 14, is forced between pressure cylinder 13 and coating cylinder 14,to form a curve, creating and receiving from and to said cylinders 14 and 13, a pressure, without being directly pressed during coating time.

So a perfect coating, on perforated or non perforated, wrinkled or non wrinkled, thin or thick pieces of sheet, is achived without having splashes on pressure cylinder 13, from sheet openings and spaces, and this is what achieves the conditions for excellent quality during work, in big production, and achieving low cost.

Said cylinders, the material coating cylinder 14 and material flow control cylinder 15, are together attached on rectangular arms 22, including supporting cylinder's apparatus, which said arms are supported with pin 23 attached at the device's sides, said arms have the ability to alter their position, determining the distances of the immaginary vertical axes from side to side of cylinders 13 and 14, said difference varies from 0 to 15cm., so giving different center lines.

Controled the arms 22 from the cam 24, alter the distance between pressure cylinder 13 and coating cylinder 14, in relation to sheet thickness. If the already coated sheet is going to be coloured or varnished, said sheet passes throught the pressing cylinders 16, where the upper said cylinder is moved upwards, and said sheet advances in the added furnace, for the coating material to be dried, and collecting said sheet at point 26 afterwards (fig 5).

When the coated with glue (adhesive) sheet is laminated (and not varnished), said sheet reaches pressing cylinders 16 and meets rolled film 19; said sheet and said rolled film are pressed, from pressing cylinders 16, simultaneously, and rolled tightly in rolle 17, while the device runs at any speed, and at the same time, underneath sheet level a cushion of air, between points 16 and 17 (final pressing), is blowed, preventing said sheet from being separated from said film, especially when sheet is heavy, or said sheet passes through the accurate added cutter (fig 5) (where the added furnace is positioned), as to become sheets 1 again.

The invented coating section of this device consists the heart of the matter of said device. Because the pressure created on sheet coating is the main factor of achieving and making the coating perfect, to perforated or non perforated sheets, for laminating or varnishing, since the continuously rotating cylinders transmit glue or varnish on sheets, the rotating on coating cylinders liquid material creates linings, said linings create spaces on the coated sheet, relative to sheet size and sheet wrinkles. If the back side of said sheet is not correctly pressed, then we would have a splashed, with glue or varnish, here and there sheet.

Without the invented section of said device, we wouldn't have the ability to laminate perforated sheets, for manufacturing package boxes for goods carrying a window, having a luxurious look, greater strenght, and allowing the cosumer to see through the box, that buys, without the said goods accepting dust or fingerprints.

Since today, the already manufactured, paper boxes with a window are covered internally with a piece of transparent plastic, attached at window's place.

Said boxes are not good looking, don't have enough sternght, compared with the ones made from the invented device, because they are not laminated externally, and the interior glued transparent piece of plastic, easily goes off, by external force, during transportation, storing, demonstration etc.

### Variations and alterations of the invented device, regarding coating and sheet lamination. Description

Some of the changes that can be done in schematic device 2 for special working requirements, are:
In schematic views of drawings 8, 8a and 8b, the coating cylinder 14 is illustrated, said cylinder constantly rotates (non controled), while over and under cylinders (material transfer and flow control), to said cylinder, are controled. Said cylinders are illustrated: in fig 8, cylinder 15, in fig 8a, cylinder 15a and 15b, and in fig 8b, cylinder 15, 15a and 15b.

The pressure cylinder 13 is attached on rectangular arms 22, said arms are by pin 23, movement relative to 0,5-15cm approx., and controled by cam 24, relative to space created between cylinders 13 and 14, respective sheet thickness.
a1. In figs 2 and 6, as illustrated, an extra coating cylinder 14 and an extra material flow control cylinder, can be added underneath pressure cylinder 13, assembled on rectangular arms 22, controled by cam 24, so having the opportunity to touch pressure cylinder 13, while being inside coating material's bowl.

With the said method, while sheet advances through the transmission apparatus 12, hits the higher positioned coating cylinder 14, curves between cylindrs 14 and 13, and is coated on both sides, simultaneously, achieving both sides coating on where need sheets, with the outcome of saving half working time.

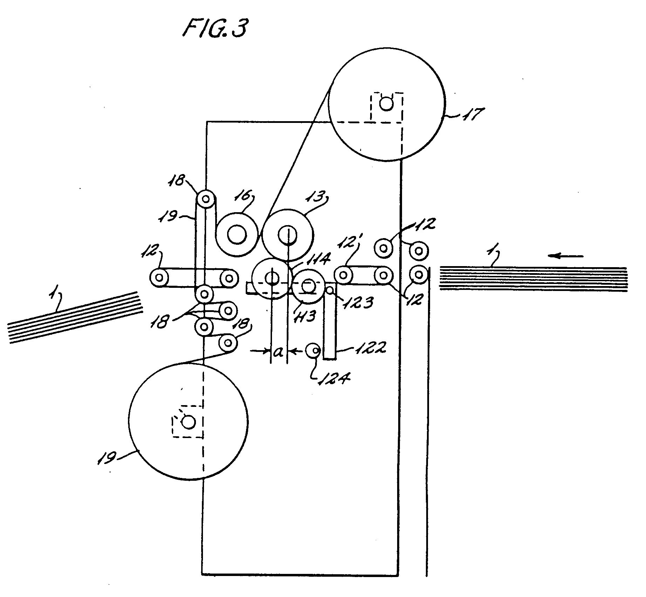

b. Fig 3 clearly illustrates, as in figs 2 and 6, cylinders order on different immaginary vertical centre lines (0-15 cm.), where pressure cylinder 13 is constantly rotated (non controled), while underneath said cylinder, cylinders 14 and 15 are attached on rectangular arms 22, said arms are supported by a longitudinaly moving pin 23 and controled by adjusting cam 24, so altering cylinders 13 and 14 contact distance.

Said device of fig 3 coat the underneath side of a sheet, and is mainly suggested for cards back side covering, using hot melt wax materials.

Also said device can do lamination on perforated or non perforated sheets, using the following method:
Sheet 1 while advanced through point 12 (rollers and transfer belts), hits pressure cylinder 13, curves from underneath side, is coated from coating cylinder 14, while said sheet is not directly pressed from pressure cylinder 13 and coating cylinder 14, with the already invented method previously described: said sheet is afterwards pressed (usually) from pressure cylinder 13 and from a pressing cylinder 16, usually using the transparent plastic film 19 and afterwards said sheet is rolled on cylinder 17.

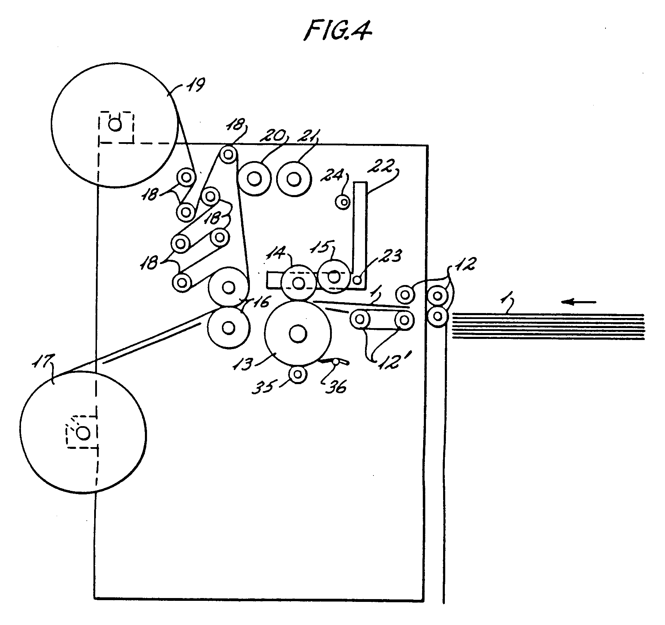

c. In fig 4 the invented device differs only from fig 2 in illustrating pressure cylinder 13 and coating cylinder 14 centres, being on the same immaginary vertical axis (distance 0 cm), pressing the coating sheet 1, directly, here in this occasion the pressure cylinder 13 gets wet from the coating material during coating process.

For keeping cylinder 13 clean and for not coating, with the coating material, the back side of the next sheet 1, a rotating brush 35 is added, said brush is deeped in an appropriate cleansing fluid, said brush running at higher r.p.m., having differnt drive from pressure cylinder 13, and an opposite D.O.R. from said cylinder. Right next to said brush 35, a wiper 36 is added, for wipping out and keeping, any material debris and the cleansing fluid, so always keeping pressure cylinder 13, clean at the pressure area of the coating sheet.

All the rest parts of fig 4 are exactly the same as in fig 2, and said device is mainly suggested for very wrinkled sheets, said sheets demand higher pressure than the one created between cylinders 13 and 14 when said cylinders are positioned on different immaginary vertical axes (distance different to 0cm).
d. Instead of having a pressure cylinder 13, as illustrated in figs 2, 3, 6, 8, 8a and 8b, a level, a curved, or a special designed surface (constraction) could be used, having the same results offered by pressure cylinder 13, when said cylinder is on different immaginary vertical axes (distance 0-15cm) from the upper or underneath sides of the coating cylinders 14, as illustrated in fig 2.
   d1. Instead of having a material flow control cylinder 15,as illustrated in figs 2, 3, 6, 8b, illustrating sheet coating, an adjustable bar or a special designed surface (constractio could be used.
e. Fig 6 illustrates part of fig 2, as a laminating device with sheets coating, and as a varnishing device without having the coating system for film's coating in rolle; cylinders 20 and 21 not included.
f. Fig 7 illustrates part of fig 2 as a laminating device for film's coating in rolle, for sheets lamination, without having the sheet coating systems; cylinders 13, 14 and 15 not included.
g. Although shelf explanatory and reminded, that fig 2 and 4 can carry both coating systems, which are; 1. sheets coating using the 13, 14 and 15 cylinders, and 2. Film's coating in rolle, using the 20 and 21 cylinders, or one of the said systems, as illustrated in figs 6 and 7.
h. In figs 2, 3 and 4 an adaption exists, for fitting the added furnace, when the devices, illustrated in said figs, work as varnishing, and substituting the said furnace with an accurate cutter for laminated sheets, when said devices work as laminating.

### Automatic Supply with continuous recycling of the coating materials. Report and description

In a coating device the material's automatic supply and the continuous recycling are of great importance, because a working person is not exclusively used for watching, refilling the material's reservoir with said material, said reservoir, because of its position, can not be very big.

Material's recycling results greatly on coating quality, because when the material is recycled, said material keeps its viscosity value, having absolute coating uniformity during coating process.

Having a device, not using the continuous recycling method, after a short working period, because of different material's viscosity, said difference being higher at material's reservoir bottom and lower on top, the coating is going to be dissimilar (lacking uniformity).

The automatic supply and continuous recycling of said coating material is done with the aid of two pumps, pump A sucks in material from device's reservoir through a pipe line, which said material is dropped between coating cylinder 14 and material flow control cylinder 15, said cylinders having opposit D.O.R., then said material stays between the two cylinders and after the coated sheets have taken the needed amount of material, the remaining material (said material guthers on cylinders ends) flows back, through especiall designed sinks, said sinks have a big inclination, in device's reservoir.

Because the device's reservoir is necessarily small (height low), the pumb B is used , said pump achieves automatic supply and continuous recycling of said coating material, supplying material from a big barrel to device's small reservoir with the following method:
Pump B sucks in material from the big barrel, through a pipe line, and supplies said material to a valve, through a pipe line, said valve is positioned on a device's reservoir side, said valve has an input and two outputs, said input is connected with the pump's B output, while first said valve's output ends up to the big barrel, through a pipe line, and second valve's output is positioned inside device's reservoir, in which said reservoir, an appropriate mechanism controls valve's piston, said piston is actueted in relation to material's level, so when level drops said valve's output permits material to run from the big barrel to the small resrvoir, and at the same time stopping the flow, back to the big barrel. When reservoir's level rises, flow from said barrel to said resrvoir stops, and material is transmitted back to said barrel.

Said method allows automatic supply and recycling simultaneously, keeping the same material's level, between cylinders 14 and 15 and at the material's reservoir, as well as the same viscosity throughout the entire device, resulting to the absolute uniform coating on all sheets.

### 3rd SECTION: ACCURATE CUTTING DEVICE FOR THE LAMINATED SHEETS IN ACCORDANCE TO THE INVENTED DEVICE Report on the previous technology

Till today the already manufactured cutting devices for laminated sheets, are based on the one side pulling method, where a leading cut, desired or not, takes place on successive sheets covering area, said area measures thousands of an inch, and said cut is only suggested for laminated sheets carrying a very thin coated film, and especially where the glue is coated on film, especilly where the glue is coated on film and not directly on the sheets. When the glue is directly coated on sheets, sheets having large openings for manufacturing boxes with window, then for sheets separation (cut), a space between successive sheets should exist, said space measures thousands of an inch, because if the sheets are covered, said sheets will stick together, since the glue is on said sheets. In such occasion the already manufactured cutting devices, for laminated sheets, are completely inadequate.

### Invented device's sheet cutting method, description:

According to fig 5, where the laminated sheets (17), are forwarded by the coupled cylinders (27), in combination with the laminating means of fig 2, 4, 6 and 7, or they are preunrolled from a preformed roll (17), where during their advance are tracked down from a tracking photocell (28), said photocell tracks down the empty space between the laminated sheets and gives the order, through an arrangement of automation to instantly stop the moving sheet, taking at the same time the right position, in order to lead the cutting blade, said cutting blade is attached to a hinge, to cut (separate) the plastic film exactly at the edge of said sheet, leaving untouched the printing points of said sheets, for their further process, as soon as the cut takes place, the piston that moves said cutting blade, returns to its initial position, the cut (separeted) sheets are collected on properly formed surface, and the same movement is automaticly repeted.

## Claims

1. A device for coating and laminating of sheets having perforations or apertures, comprising, a sheet feeding device (2 to 11, HEZ) for feeding said sheets (1) one at a time, coating means for coating said sheets comprising a coating cylinder (14) and a material flow control cylinder (15); means for transporting a film material (17) from a roll to a set of pressure cylinders (16) between which the coated sheets (1) are pressed with said film material (17) and a cutting device (27 to 33) for cutting the film material (17) characterised in that the sheet feeding device comprises a horizontal platform onto which a stack of sheets are placed, and a feeding head which transfers said sheets (1) from said platform to said coating means, said platform being vertically movable and provided with openings through which a plurality of bars or blades (HEZ) extends, said bars being adjustable in a vertical direction; the top portion of the top portion of said bars (HEZ) forming an obtuse angle with relation to the lower bar portion and pointing in the direction of movement of said sheets, said feeding head being provided with a plurality of suction cups (2), which are being supported on first or second supporting blocks (3), said first and second supporting blocks (3) with said suction cups (2) are being supported on first and second shafts (4a), respectively, said supporting blocks (3) are capable of being transposed along and being rotated arround its respective shaft (4a); said first and second shafts (4a) are attached to the lower end of a plurality of first and second arms (5, 5a) respectively; the upper ends of said first arms (5a) being pivotally attached to a horizontal axis (4); said second arms (5) being supported and guided by slide members (7), enabling said second arms (5) to slide up and down; a cam mechanism (9) which is attached to a central shaft (8) rotates and obliges the second arms (5) to slide up and down and pivots the first arms (5a) around said horizontal axis (4); springs (11) which restore the said arms (5, 5a) with said suction cups (2) in their initial position; and in that the coating means further comprises a fixed position rotatable pressing cylinder (13) which is parallel to the horizontal coating cylinder (14), said pressing cylinder (13) and said coating cylinder (14) being placed above each other with a horizontal offset (a) between them, said coating cylinder (14) and said material flow control cylinder (15) being attached at each and to horizontally arranged first legs of a pair of L-shaped arms (22), the distance between said cylinder (13) and said coating cylinder (14) is regulated with a cam (24) engaging the second leg of said L-shaped arms (22), said L-shaped arms are pivotally attached to pins (23) at the point where the two legs of each arm meet; and in that the cutting device (27 to 33) comprises a knife (29) and a plate (33), both extending across the film material (17) with sheets (1) which are unrolled and fed steadily into the cutting device (27 to 33), a piston (31) which moves the knife (29), a photocell (28) being placed before said knife (29) in order to register the position of said sheets (1) and being connected to a control unit; said control unit is capable of stopping said film material (17) when an edge of a sheet (1) is positioned such that, upon activation of said knife (29), said film material (17) is cut at the edge of said sheet; means for collecting the cut off sheets.

2. A device as claimed in claim 1, wherein the horizontal offset (a) between the axes of the coating cylinder (14) and the pressing cylinder (13) is within the range from 0 to 15 cm.

3. A device as claimed in claims 1 or 2, modified in that the axes of said coating cylinder (14) and said material flow control cylinder (15), being fixed, and said pressing cylinder (13) is supported on said L-shaped arms (22) and thereby being movable via said cam (24).

4. A device as claimed in claims 1,2 or 3, modified in that said pressing cylinder (13) has been replaced by a plane or curved smooth surface.

5. A device as claimed in claims 1 or 3, wherein the horizontal offset (a) between the axes of said coating cylinder (14) and said pressing cylinder (13) is 0 cm, and wherein at least one rotating brush (35) is provided parallel, and in engagement with said pressing cylinder (13); said rotating brush being provided with an appropriate cleaning fluid, and being rotated in the opposite direction as said pressing cylinder (13); at least one scraper (36) is provided for scraping off said cleaning fluid from the surface of said pressing cylinder (13).

6. A device as claimed in claims 1,2,3 or 5, wherein coating material is also provided to the pressing cylinder (13) by means of a second coating cylinder (14) and a second material flow control cylinder (15), attached on a second set of L-shaped arms (22) and wherein the distance between said second coating cylinder (14) and said pressing cylinder (13) attached to said L-shaped arms (22) is being regulated by a second cam (24), whereby said second coating cylinder is brought into or out of contact with said pressing cylinder (13).

7. A device as claimed in claims 1,2 or 5, wherein said coating cylinder (14) is supported on a frame of said device; said pressing cylinder (13) is positioned below said coating cylinder (14) and being supported on L-shaped arms (22) being regulated via a cam (24); and wherein two material flow control cylinders (15, 15a) are positioned above said coating cylinder (14) on L-shaped arms (22) being regulated via a cam (22).

8. A device as claimed in claim 7, wherein between said coating cylinders (14) and said material flow control cylinders (15 and 15a) a third material flow control cylinder (15b) is provided.

9. A device according to any of the claims 1 to 8, modified in that the bars (HEZ) forming said obtuse angle is replaced by an air streem, being capable of lifting the upper sheet in the said stack of sheets when said sheet is forwarded to the coating means.

10. Method for feeding, coating, laminating and cutting of sheets having perforations or big apertures, comprising the steps of:
a) placing the sheets to be fed on a horizontal platform, said platform being vertically movably and having apertures through which a plurality of bars or blades (HEZ) extends, said bars being adjustable in a vertical direction in order to further extend through said perforations or apertures of said sheets placed on said platform, the top portion of said bars (HEZ) forming an obtuse angle with relation to the lower bar portion and pointing in the direction of movement of said sheets, so that at the moment of feeding of the sheets the rear edge of the opening or apertures of said sheets will not engage with the front edge of the hole of the following sheet in the stack;
b) successively feeding said sheets in a horizontal plane towards the coating means;
c) entirely coating one of the surfaces of said sheets with glue by means of a coating cylinder and a pressing cylinder; the coating material is being provided to said coating cylinder by a material flow control cylinder; said coating cylinder and said material flow cylinder being attached at each end to horizontally arranged first legs of a pair of L-shaped arms, the distance between said pressing cylinder and said coating cylinder is regulated via a cam engaging the second leg of said L-shaped arms, said L-shaped arms are pivotally attached to pins at the point where the two legs of each arm meet;
d) keeping said pressing cylinder clean from glue by either: positioning said coating cylinder above said pressing cylinder with a horizontal offset (a) between their respective parallel axes such that the sheets to be coated, being fed in a horizontal plane, have to follow a curve while passing through between said pressing and said coating cylinder; whereby the surface of said two cylinders do not touch each other;
or:
when the axes of said pressing and said coating cylinder are placed in the same vertical plane, at least one rotating brush is provided parallel, and in engagement with said pressing cylinder; said rotating brush being provided with an appropriate cleaning fluid, and being rotated in the opposite direction as said pressing cylinder; at least one scraper is provided for scraping off said cleaning fluid from the surface of said pressing cylinder;
e) pressing said sheets together with a film material being unrolled from a roll, between at least one pair of pressing cylinders, whereby the surface of said sheets which have been covered with glue will adhere to said film material; immediately after said pressing cylinders an air stream is blowing upwards, in order to prevent that said sheets will come off said film material, when said sheets are adhering to the below side of said film material;
f) rolling the film material with said sheets in a roll or cutting the film material between said sheets by means of a cutting device; said cutting device comprising a photocell tracking the edges of said sheets onto said film material, said photocell gives an order through a control unit, to instantly stop said moving film material with said sheet when the edge of a sheet is at the point where a knife of said cutting device cuts when said knife is activated by said control unit; after the cutting operation said knife is restored in its initial position, and waiting for a signal to be given thought the control unit to restart the cutting cycle of the following sheet ; collecting said cut sheets by a sheet collection unit.

11. A device according to claim 10 modified in that the bars (HEZ) forming said obtuse angle are replaced by an air stream, being capable of lifting the upper sheet in the said stack of sheets when said sheet is forwarded to the coating means.

## Patentansprüche

1. Maschine für den Überzug and für die Plastiküberschichtung der Blatt, die Durchbohrungen oder Öffnungen haben, einschliesslich einer Blätterbeschickungsmashine (2 bis 11, HEZ) zur Beschickung mit Blätter jewells ein BLATT, Überzugsmittel zur Überzug der Blätter, einschliesslich einer Überzugszylinder (14) und einer Zylinder zur Materialregelung (15), Durchfügrungsmittel des Films (17) von der einen Rolle zu einem Zylinderset zur einem Set von Druckzylinder (16), swischen denen die Überzogene Blätter (1) mit dem Film gepresst werden (17), und einem Schneidegerät (27 - 33) für das Schneiden des Films, gekennzeichnet vom der Tatsache, dass das Blätterbeschickungsgerät eine horizontale Platform beeinhaltet, auf der Stapel Blätter eingelegt ist und Beschickungskopf, die vorgennante Blätter (1) von der Platform auf die Überzugsmittel weiterfürht, die Platform wird senkrecht beweglich und wird mit Öffnungen beschickt durch die sich eine mehrzahl von Barren oder Schneiden (HEZ) ausdehnt, die Barren sind in senkrechte Richtung eingepasst, der obere Teil der Barren (HEZ) im Bezug mit dem unteren Teil der Barren, zeichnet eine stumpfe Winkel und die Bewegungsrichtung der Blätter markiert, die Beschickungwkopf ist mit einer mehrzahi von Saugschropfköpfe ausgestattet (2), und stützen sich nacheinander an der erste und sweite Achsen (4a), die Stützungsblocks (3) können sich nach der Länge bewegen und werden um die relevanten Achsen durchgedreht (4a), die erste und die zweite Achse sind am untersten Punkt einer mehrzahi erster und zweiter Punkte nacheinander befestigt (5, 5a) die oberste Punkte der erste Arme (5a) sind hauptsächlich an einem horizontalen kleinen Achse befestigt (4) die zweite Arme werden gestützt und werden in Gleite durchgegleitet (7) es wird den zweiten Arme (5) ermöglicht hoch runter zu gleiten wobei der Exzentermechanismus (9) der in einem Zentralachse angepasst ist (8) der sich dreht und die erste Arme (5a) um die horizontalen klein Achse umdreht (4), Feder (11), die die Arme (5, 5a) mit den Saugschröpfkopfe zur anfänglichen Position zurückzuführen, und bei diesem beeinhalten die Überzugsmittel einen Druckzylinder der sich in einer festen Position umdreht, der sich parallel mit dem horizontallen Überzugszylinder befindet (14), der Druckzylinder (14) befindet aufeinander, wobei sich zwischen denen ein horizontaler Ausgleich befindet, der Überzugszylinder (14) und der Materialkontroizylinder (15) stützen sich auf horizontalen Füsse des Paares der Arme mit L Form (22), der Abstand zwischen dem Druckzylinder (15) und dem Überzugszylinder (14), wird mit einem Exzent (24) reguliert, wobei der zweite Fuss der Arme mit L Form (22) gezwungen wird, die Arme mit L Form drehen sich wobei sie an den Nadeln befestigt sind (23), an der Stelle an der sich beide Füsse jedes Arm treffen, und das Schneidegerät (27 bis 33) beinhaltet ein Messer (29) und einem Teller (33) und beide dehnen sich durch das Film materiall (17) aus mit Blätter (1) die sich auswickeln und im Schneidegerät (27 bis 33) fest beschickt werden, ein Kolben der ein Messer bewegt (29) eine Fotozelle (28) nur dem Messer befästigt zum Zweck der Registrierung der Position der Blätter (1), und der Verbindung mit einer Kontrolleinheit, die Kontroll einheit ist in der Lage das Film materiali (17) zu stoppen, wenn sich am Rand des Blattes (1) so eingelegt ist dass sie sich mit der Bewegung des Messers (29), das Filmmaterial (17) schneidet am Rand des Blattes, selectionsmittel der geschnittenen Blätter.

2. Anordnung wie im Anspruch (1) angefordet wird, wobei sich der horizontale Ausgleich (a) zwischen dem Überzugszylinder (14) und dem Druckzylinder (13) zwischen 0 und 15 cm befindet.

3. Anordung wie im Anspruch oder angefordet wird, wird verärdern so dass die Achsen des Materialkon trollzytlinders (15) sich in fenster Position befinden und der Druckzylinder (13) stützt sich an den Armen mit L Form (22) und bewegt sich durch den Exzent (24).

4. Anordnung wie in den Ansprechen 1 oder 2 oder 3 angefordet wird verändert so dass der Druckzylinder (13) von einer Flachen oder einer Krummen flachen Oberfläche ersetzt.

5. Anordnung wie in den Ansprechen 1 oder 3 angefordet wird, wo der horizontale Ausgleich (a) zwischen dem Überzugszylinder (14) und dem Druckzylinder (13) 0 cm ist, und wo mindenstens eine Drehbürste (35) parallel und in Verschlinkung mit dem Druckzylinder (13) angelegt ist, die Drehbürste nimmt die geeihnete Reinigungsflüssihkeit auf und dreht sich in seltlicher Richtung mit dem Druckzylinder (13) es wird mindenstens ein Auskratzer (36) eingelegt der die Flüssigkeiten saubern und von der Oberfläche des Druckzylinders (13) auskratzt.

6. Anordnung wie in den Ansprechen 1 oder 2 oder 3 angefordet wird, wo das Überzugsmaterial nimmt auch an dem Druckzylinder (13) durch den zweiten Druckzylinder und den zweiten Kontrollzylinder der Flüssig keitsmateriall (15), gestützt in einem zweiten Set von Arme in einer L Form (22) und der Abstand zwischen den zweiten Überzugszylinder (14) und den Druckzylinder (13) der auf die Arme in L Form (22) stützt, reguliert durch einem zweiten Exzent (24), durch den der zweite Überzugszylinder ein oder aus hineingeht aus dem Kontakt mit dem Druckzylinder (13).

7. Anordnung wie in den Ansprechen 1 oder 2 oder 5 angefordet wird, wo das der Überzugszylinder (14) stützt am Gestell der Anordnung, der Druckzylinder (13) ist unter dem Überzugszylinder (14) eingelegt und an den Arme in L Form (22) gestützt ist und regullert aus einem Exzent (24), wobei die belde Kontrollzylinder der Flüssigkeitmateriall (15, 15a) sind auf dem Überzugszylinder gestellt (14) in Arme in L Form (22) die aus dem Exzent reguliert (24).

8. Anordnung wie in den Asprechen 7 angefordet wird, wobel der Überzugzylinder (14) und die Kontrollzylinder der Flüssigkeitsmateriall (15, 15a) und ein dritte Kontrollzylinder der Flüssigkeitsmateriall (15b) zur Verfügung gestellt wird.

9. Anordnung wie in irgendeine der Ansprüchen 1 bis 8 angefordet wird, die verändert werden, im Punkt wo die Barren (HEZ) mit stupfe Winkel aus der Luftabschussrampen ersetzt werden, die zum Abheben das obere Blatt des Stapels der Blätter fähig sind, wenn das Blatt in der Überzugsmitteln angetrieben wird.

10. Die Methode der Beschickung- , der Uberzugs-, der Plastikübeschichtung und des Schneidens der Blätter, die Durchbohrungen oder Öffnungen haben, schliesst folgende Schritte ein:
a) Wir legen die Blätter in eine horizontale Platform um die zu beschicken, die Platform wird in eine senkrecht Richtung bewegt und sie hat Öffnungen, durch denen eine mahrzahi von Barren oden Winkeln (HEZ) ausgestreckt sind, die
Barren sind in einer senkrechte Richtung angepasst, mit dem Ziel dem waiteren Austrecken der Durchbohrungen oder der Öffungen der in die Plattform der Blätter eingestellt sind, der obere Teil der Barren (HEZ) zeichnet eine strupfe Winkel, und das im Bezug mit dem untere Teil der Barren und marklert die Bewegungsrichtung der Blätter, so das der Moment der Beschickung mit Blätter, das hintere Ende der Öffnungen oder der Durchbohrungen wird nicht mit dem vordere Ende der Loch der nächte Blatt der Stapel verschlingen.
b) die Blätter werden mit Erfolg in einem horizontale Oberfläche innerhalb der Überzugsmittel beschickt.
c) Kopette Überzug einer Oberfläche der Blätter mit Kieber durch einem Überzugszylinder und einem Druckzylinder, der Überzugsmateriall steht zum Überzugszylinder aus einem Kontrollzylinder der Flüssigkeitmateriall zur Verfügung, der Überzugszylinder der Kontrollzylinder der der Flüssigkeitmateriall zur Verfügung, der Überzugszylinder und der Kontrollzylinder der Flüssigkeits materiall sind aus jedem Ende an die horizontale angeordnetan Füsse der Paare der Arme in L Form eingstellt, der Abstand zwischen der Druckzylinder und der Uberzugszylinder wird durch einem Exzent reguliert, und dies wird der zweite Füss der Arme in L Form verschlingen, die Arme in L Form sind an den Achsen in Nadeln angefügt und zwar in dem Punkt, wo die beide Füsse jedes Arms, miteinander treffen.
d) Der Druckzylinder wird sauber aus Kleber gehaltet, entweder - wenn man den Überzugszylinder auf dem Druckzylinder mit einem horizontalen Ausglecih (a) zwischen der relevanten parallelen Achsen eingestelit, so dass die Blätter überzogen werden, beschikt in einer horizontalen Oberfläche, ein Beugen
gefolgt werden müssen, während die innerhalb des Druckzylinders und des Überzugszylinders durchgehen, wo seine Oberfläche nicht die eine den andere berührt,
oder
- wenn die Achsen des Druckzylinders und des Überzugszylinders in dem selben Ebene eingestellt sind, mindestens eine Drehbürste parallel zur Verfügung steht und in einem Falten mit dem Druckzylinder, die Drehbürste tränkt durch der geeignete Reinigungsmittel durch, und wird in der entgegengesetzten Richtung mit dem Druckzylinder, mindenstens ein Schabeisen für das Kratzen der Reinigungsmittel aus der Oberfläche des Druckzylinders gewährt.
e) Werden Blätter mit fem Film zusammengepresst, der aus der Roll entfaltet, innerhalb eine Paare von Druckzylinder, wo seine Blätteroberfläche, die mit Kleber überzogen werden, wird mit dem Filmmateriall angeklebt, sofort nach dem Druckzylinder, die Lubtabschussrampen nach oben schiessen, mit dem Zlei die Blätter abzuwenden, nach aussen aus der Filmmateriall zu kommem, wenn die untere Seite an dem Filmmateriall geklebt wird
f) Wird das Filmmateriall mit dem Blätter in einer Rolle eingewickelt order wird der Filmmateriall zwischen den Blätter mit der Hilfe einer Schneidemaschine geschnitten, die Schneidemaschine beeinhaltet eine Fotozelle, der das Ende der Blätter auf dem Filmmateriall sucht, das Fotozelle gibt der Befehl durch einer Kontrolleinhelt, das Filmmateriall vorübergehend zu stoppen, das Fotozelle gibt die BVefehl durch einer Kontrolleinheit, das Filmmaterial vorübergehend zu stoppen, wenn das Ende des Blattes an der Schnittpunkte ist, wo das Messer der Schneidemaschine schneidet, wenn aus den Kontrolleinheit in Bewegung kommt, nach jede Schnitt sich das Mewsser in seinem erste Position zurückgebracht wird, und das Signal aus der Kontrolleinheit warbet, die Schnittzyklus für das nächste Blatt anzufangen, werden die geschnittene Blätter aus den Selektionselnheit selektiert.

11. Anordnung wie im Anspruch 10 geändert wird, am dem Punkt wo die Arme (HEZ), die die strupfe Winken zusammensetzen, werden aus Luftabschussrampen ersetzt, sind fähig das obere Blatt der Stapel der Blätter anzuheben, wenn das Blatt weiter an der Überzugsmittel geleitet.

## Revendications

1. Un appareil pour investir et élaminer des tôles ayant des perforations ou des trous, comprenant un appareil adistribuer des tôles (2 a 11, HEZ) pour distribuer les dites tôles, (1) une chaque fois, des moyens de revêtement, les dites tôles comprenant un cylindre de revêtement (14) et un cylindre a controller la cours de material (15);
moyens a transporter une bande de material (17) a partir d'une rouleau jusqu' a une pressure de cylindres fixée (17) entre lesquels les tôles revêtues (1) sont pressées avec la dite bande (17) et un appareil de coupûre (27 A 33) pour couper la bande (17) caracterisés du fait que l' appareil a distribuer la tôle se compose d'une plate-forme horizontale sur laquelle sont placés un rouleau de tôles, et une tête a distribuer qui transfert les dites tôles (1) a partir de la dite plate-forme aux lesdits moyens de revêtement;
la dite plate-forme se déplace verticallement et elle est fournie avec des trous a travers lequelles s' etendent une multitude de batons ou des lames (HEZ); les dits batons sont regularisés en direction verticale. La position du sommet de dites batons (HEZ) formant une angle obtuse en relation avec la portion du baton la plus basse en direction de telles tôles, la dite tête a distribuer est fournie avec un plurarité de coupelles de succion (2), qui sont soutenues sur les premières ou les deuxiemes blocks de soutien (3).
Les dites prmières et deuxiemes blocks de soutient (3) avec les dites coupelles de succion (2) sont transportees sur le premiere et la deuxième arbres (4a), respectivement, les dites morceaux de soutient (3) sont capables d' etre transportés au sens de longitude et sont transportes autour de son arbre respective (4a). Le dites première et second arbres (4a) sont attachés sur l' extremité de dessous d'une plurarité de la première et de la deuxième bras (5, 5a) respectivement.
Les extremités de dessus de lesdites bras (5a) sont attachés d' une manière pivotant sur un arbre horizontale (4). Les dites secondes bras (5) qui sont supportés et guides par des membres glissant (7), permettant alors aux secondes bras (5) de glisser vers le haut et vers le bras. Une mécanism a cammes (9) qui est attaché a un arbre central (8) tourne et oblige les secondes bras (5a) autour du ledit axe horizontale (4);
les ressorts (11) qui apportent les dits ressors a la position initiale (5, 5a) avec les dites coupelles a succion (2) a leur position intiale; et sur quoi le moyen de revêtement comprimé davantage a une position fixée rotatable comprimant le cylindre (13) qui est parallel au cylindre de revêtement horizontale (14), le dit cylindre comprimant (13) et le dit cylindre de revêtement (14) sont placés au-dessus l'un de l' autre a l' aide d' une offset horizontale (a) entre eux;
Le dit cylindre de revêtement (14) et le dit cylindre a controler la cours du material (15) etant attaché a chaque extremité aux premiers pieds arrangés horizontallement d' une paire des bras en forme L(22), la distance entre chaque cylindre (13) et le dit cylindre de revetement (14) est regulée a une came (24) engageant le second pied de lesdits bras a forme L (22), les dits bras en forme L sont attaches d' une manière pivotante aux chevilles (23) au point ou les deux pieds de chaque bras se rencontrent.
Et en quoi les appareil de coupure (27 a 33) comprime un coureau (29) et une tôle (33), tous les deux s' etendant a travers la bande de material (17) avec des toles (1) qui sont defilés et distribues fermement dans l' appareil de coupure (27 a 33), un piston (31) qui fait mouvoir le couteau (29), a photocell (28) etant place avant le dit couteau (29) afin d' enregistrer la position des dites tôles (1) et etant liés a la unite de controle.
La dite unité de controle est capable d' arrêter la dite bande de material (17) quand une pointe d' une tôle (1) est positionée d' une telle manière que, sous l' activation dudit couteau (29), la dite bande de materiel (17) est coupée sur la pointe de la dite tôle. Des moyens pour ramasser les tôles coupées.

2. Un appareil comme celui qui est demendée, selon la demande 1, d' après laquelle l' offset horizontale (a) entre les axes du cylindre de revetement (14) et le cylindre comprimant (13) est dans la region de 0 à 15 cm.

3. Un appareil comme celui qui est demandée selon les demandes 1 ou 2, modifie en quoi les axes du dit cylindre de revêtement (14) et du dit cylindre a controle du cours de materiel (15), en train d' etre fixé, et le dit cylindre comprimant (13) est soutenu sur les dits bras en forme L (22) et donc etant mobilaire a travers le dit camme (24).

4. Un appareil comme celui reclame dans les demandes 1,2 ou 3, modifiés en quoi le dit cylindre comprimant (13) a été revouvelé par une surface horizontale ou courbée plate.

5. Un appareil comme celui reclame selon les demandes 1 ou 3, tandis que l' offset horizontale (a) entre les axes du dit cylindre de revêtement (14) et ledit cylindre comprimant (13) est 0 cm, et la ou il y a au moins une brosse de rotation parallel (35), et, engage avec le dit cylindre do compression (13), la dite brosse de rotation qui sont equippée a une liquide de nettoyage appropriée, et tournant dans la direction opposite de celle du cylindre de compression (13). Il y aura au moins une rape pour râper le dit liquide de nettoyage de la surface dudit cylindre de compression (13).

6. Un appareil comme reclamme dans les demandes 1,2,3 ou 5, la ou le materiel de revêtement est aussi fourni au cylindre de compression (13) avec l' aide d' un second cylindre de revêtement (14) et un second cylindre de control du cours du materiel (15), attaché sur une seconde serie des bras (22) en forme L et ou la distance entre ledit second cylindre de revêtement (14) et le dit cylindre de compression (13) attache aux les dits bras en forme L(22) est regularisé par la seconde came (24), par laquelle le dit cylindre de revêtement est conduit soit dedans soit dehors le contact avec ledit cylindre de compression (13).

7. Un appareil comme reclamme dans les demandes 1,2 ou 5, ou le dit cylindrer de revêtement (14) est soutenu sur une chassis du dit appareil; le ledit appareil de compession (13) est positionné au-dessous dudit cylindre de revêtement (14) etant supporté sur des bras en forme L (22) regularisés par la came (24), et ou deux cylindres de control de cours du materiel (15, 15a) sont posiotionnes au-dessus dudit cylindre de revêtement (14), sur des bras en forme L(22) regularisés par la came (24).

8. Un appareil comme celui reclamés dans la demande 7, ou les dits cylindres de revêtement (14) et les dits cylindres a controle de cours du materiel (15 et 15a) il y a fourni un troisieme cylindre a controle de cours du materiel (15b).

9. Un appareil d' apres n' importe quelle demande de 1 a 8, modifie en ce qui concerne que les bras (HEZ) formant le dit obtu angle est remplace par un courant d'air etant capable d' elever la tole de dessus dans ledit packet de toles quand ladit tole est envoyes aux moyens du revetement.

10. Method de distribuer, revetir, laminer et couper les toles ayant de perforations ou des grands trous, comprenant les pas de:
a) Placer les toles d' etre distribuées sur une plate-forme horizontale, la dite plate-forme etant verticalement deplacee et ayant des apertures a travers le les quelles s' etande une plurarite des bras ou des lames (HEZ);
les dits bras sont regularisés dans la direction verticale de sorte qu' ils s' etendent a tavers les dites perforations ou des apertures des dites toles placées sur la dite plate-forme, la portion du xommet des dites bras (HEZ) formant un angle obtus en relation de la portion de bras de dessous et pointees vers la direction du mouvement des dites tôles, de sorte que au moment de la distribution des toles la derriere pointe de l' apperture our appertures de telles tôles ne seront pas engages avec la pointe d' avante du trou de la suivante tole dans la pile.
b) Distribuant les dites toles dans le plan horizontal vers les moyens de revetement.
c) Revêtir entièrement une de surfaces de dites tôles a cement a l' aid d' un cylindre de revêtement et d' un cylindre de compression; le materiel de revêtement est delivré audit cylindre de revêtement par un cylindre a controle de cours de materiel;
le ledit cylindre de revêtement et le dit cylindre de cours de materiel sont attachés a chaque extremite aux premiers pieds a disposition verticale d' une paire des bras en forme L; la distance entre ledit cylindre de compression et le ledit cylindre de revetement est regularisé a l' aide une came engageant au second pied des lesdits bras en forme L; les dits bras en forme L sont attachés en pivotant aux chevilles sur le point ou les deux pieds de chaque bras se rencontre.
d) En tenant le ledit cylindre de compression libre de cement soit: par positionner le ledit cylindre de revêtement au-dessus du cylindre de compression avec une horizontale offset (a) entre leur axes corresopondentes paralleles de sorte que les tôles en train d' etre revetus, etant distribues en un plan horizontal, doivent suiver une courbe pandent qu' ils passent a travers le ledit cylindre de revêtement et celui de compression ou la surface desdites deux cylindres ne touche l' un l' autre.
ou:
Quant les axes dudit cylindre de compression et du celui de revêtement sont placés dans le meme plane vertical, il y a fournis au moins une brosse parallele, et en engangement avec le cylindre de compression. Le ledit brosse de rotation est fourni avec une liquide de nettoyage correcte, et etre tourne dans la direction opposite a celle du cylindre de compression. Au moins il y a fourni une rape pour raper le liquide de nettoyage du surface dudit cylindre de compression.
e) Comprimer les dites toles ensemble a l' aide d' un materiel de bande qui est defile d'un rouleau, entre au moins une paire des cylindres de compression, ou la surface desdites toles qui sont couvertes de cement sera adhere au dit materiel de bande.
Des que les lesdits cylindres de compression commencent fonctionner, un courant d' air est directe vers le haut, afin d' empecher que les lesdites toles soient detaches du material de bande, quand les lesdites toles dont adherés a la côte de de-dessus dudit material de bande.
f) Roulant le material de bande avec les lesdites toles en un rouleau ou coupant le material de bande entre les lesdites toles a l' aide d' un appareil de coupure;
le ledit appareil a coupure incorpore un photocell qui suit les pointes desdites tôles sur le materiel de bande, le ledit photocell donne une ordre a travers l' unité de controle, pour arreter a l' instant le ledit mobilaire material de bande avec le ledite tole quand la pointe d'une tôle est sur le point ou un couteau dudit appareil de coupure coupe quand le ledit couteau est activé par le ledit unité de controle;
après l' operation de coupure, le ledit couteau est retourné a sa position initiale, et attandent qu' un signal soit donné par l' unité de contrôle pour re-demarrer le cycle de coupure de la tôle suivante: ramasser les lesdites tôles par une unité a ramasser des tôles.

11. Un appareil en conformité avec la demande 10 modifiée d' après que les bras (HE2) formant un angle obtus soient remplaces par un courant d' air, etant capable d' 'elever la tôle de dessus dans la pile principale des tôles quant la ladite tôle est envoyée aux moyens de reveture.
